# EUROPÄISCHE PATENTSCHRIFT

(11) **EP 3 785 236 B1**
(45) Veröffentlichungstag und Bekanntmachung des Hinweises auf die Patenterteilung: **11.01.2023**
(21) Anmeldenummer: 19801553.9
(22) Anmeldetag: 11.11.2019
(51) Int. Cl.: G07C 5/00, G07C 5/08, G06F 16/50, G08G 1/017, H04N 1/00

(54) **VERFAHREN ZUM VERARBEITEN VON UMGEBUNGSINFORMATIONEN EINES KRAFTFAHRZEUGS UND ELEKTRONISCHES INFORMATIONSVERARBEITUNGSSYSTEM**
METHOD FOR PROCESSING SURROUNDINGS INFORMATION OF A MOTOR VEHICLE AND ELECTRONIC INFORMATION PROCESSING SYSTEM
PROCÉDÉ POUR LE TRAITEMENT D'INFORMATIONS D'ENVIRONNEMENT D'UN VÉHICULE AUTOMOBILE ET SYSTÈME DE TRAITEMENT D'INFORMATIONS ÉLECTRONIQUE

(30) Priorität: 06.12.2018 DE 102018221093
(43) Veröffentlichungstag der Anmeldung: 03.03.2021
(73) Patentinhaber: Audi AG, 85045 Ingolstadt (DE)
(72) Erfinder: GEYER, Jakob, 91171 Greding (DE); GUTTENBERGER, Manuel, 91052 Erlangen (DE)
(86) Internationale Anmeldenummer: PCT/EP2019/080793
(87) Internationale Veröffentlichungsnummer: WO 2020/114716

(56) Entgegenhaltungen:
- US-A1- 2009 015 684
- US-A1- 2017 084 065
- US-A1- 2017 220 816
- US-B1- 9 436 180
- "General Data Protection Regulation (GDPR) - Article 15 - Right of access by the data subject", , 25 May 2018 (2018-05-25), Retrieved from the Internet: URL:https://gdpr-info.eu/art-15-gdpr/ [retrieved on 2021-07-19]

## Beschreibung

Ein Aspekt der Erfindung betrifft ein Verfahren zum elektronischen Verarbeiten von Umgebungsinformationen eines Kraftfahrzeugs. Die Umgebungsinformationen werden von zumindest einer Erfassungseinheit des Kraftfahrzeugs erfasst. Personenbezogene Informationen, die in den Umgebungsinformationen enthalten sind, werden abhängig davon, ob die Person, welche die personenbezogenen Informationen betreffen, einen elektronischen Antrag gestellt hat, anonymisiert und/oder gelöscht. Darüber hinaus betrifft ein Aspekt der Erfindung ein elektronisches Informationsverarbeitungssystem.

Aus der US 2009/015684 A1 ist ein Verfahren zum elektronischen Verarbeiten von Umgebungsinformationen eines Kraftfahrzeugs bekannt. Die Umgebungsinformationen werden von zumindest einer Erfassungseinheit des Kraftfahrzeugs erfasst. Es werden in dem Zusammenhang personenbezogene Informationen erfasst. Es ist jedoch dort nur eine Anonymisierung dieser Daten möglich. Von einer elektronischen Einheit wird angeboten, eine derartige Anonymisierung vorzunehmen und ein Nutzer kann erst dann auswählen und entsprechendes durchführen lassen, ob diese Anonymisierung vollzogen werden soll. Dadurch ist auch nur ein systemseitiges Anfragen bezüglich eines Vorgehens an den Nutzer vorgesehen.

Darüber hinaus ist aus der US 2017/220816 A1 ein Verfahren zum elektronischen Verarbeiten von Umgebungsinformationen eines Kraftfahrzeugs bekannt. Auch hier werden Umgebungsinformationen von zumindest einer Erfassungseinheit des Kraftfahrzeugs erfasst. In diesem Stand der Technik ist lediglich ein Verändern von Interessensregionen vorgesehen, wenn eine geometrische Klasse, die mit einer Identität einer Person assoziiert ist, auftritt. Wie ein derartiges Verändern des Bilds im Bereich der Interessensinformation erfolgt, ist nicht erläutert. Eine derartige Veränderung wird in diesem Stand der Technik ausschließlich automatisch durch das System durchgeführt.

Aus der DE 10 2015 217 492 A1 sind eine Vorrichtung und ein Verfahren zum Erstellen oder Aktualisieren einer Umfeldkarte eines Kraftfahrzeugs bekannt. Eine Bildbearbeitungseinrichtung ist dort derart ausgebildet, dass personenbezogenen Daten, die in den erfassten Abbildungen enthalten sind, erkannt werden und die personenbezogenen Merkmale in den erfassten Abbildungen analysiert werden. Diese Analysierung erfolgt unabhängig von der Person, die tatsächlich erkannt wurde. Ein Analysieren oder Löschen erfolgt pauschal dahingehend, dass dann, wenn eine Person als Objekt in der Abbildung erkannt wird und sich dahingehend von anderen Arten von Objekten unterscheidet, eine Anonymisierung und/oder Löschung erfolgt. Es ist dort nicht vorgesehen, zu erkennen, um welche Person es sich konkret handelt. Erst dann, wenn die Anonymisierung und/oder Löschung vorgenommen wird, wird die Abbildung in einem Speicher abgespeichert.

Ein Nachteil dieser Vorgehensweise ist dahingehend zu sehen, dass ein hoher Aufwand betrieben werden muss, um in den jeweiligen Abbildungen grundsätzlich und stets zu erkennen, ob sich darin Personen befinden, die dann allesamt vollständig gelöscht oder anonymisiert werden müssen.

Darüber hinaus ist aus der US 2008/0180459 A1 bekannt, dass durch eine Anonymisierungseinheit personenbezogene Informationen in einer Abbildung anonymisiert werden können. Auch dort wird im Wesentlichen eine pauschale Anonymisierung vorgenommen. Es kann jedoch vorgesehen sein, dass eine konkrete Person sich bei dem entsprechenden System quasi identifiziert. Bezüglich der Anonymisierung kann vorgesehen sein, dass mehrere Anonymisierungsstrategien angeboten werden und durch eine Person selbst eine dieser Anonymisierungsstrategien ausgewählt wird. Auch bei dieser Ausgestaltung ist ein relativ pauschales Anonymisieren oder Löschen vorgesehen, welches sehr aufwendig ist.

Darüber hinaus ist aus der US 9 436 180 B1 ein Fahrzeug bekannt, welches explizit zur Erfassung von Umgebungsinformationen ausgebildet ist, wobei diese Umgebungsinformationen dann für andere Zwecke verwendet werden. Beispielsweise können diese für die allgemein öffentliche Zugänglichkeit von Landkarten oder dergleichen zur Verfügung gestellt werden. Bei diesem Stand der Technik ist es möglich, dass Nutzer an eine zentrale Einheit den Nutzer eindeutig identifizierende Informationen, insbesondere auch konkrete Möglichkeiten angeben können, um die Privatsphäre schützen zu können. Dies bedeutet, dass diese Information dann an das aufnehmende Fahrzeug übermittelt werden und dann, wenn sich das Fahrzeug in diesem örtlichen Bereich befindet oder sich in Zukunft dorthin bewegt, dann eine Anonymisierung oder Löschung erfolgt, wenn dieser örtliche Privatbereich von der Erfassungseinheit des Fahrzeugs erfasst wird. Es wird bei dieser Ausgestaltung daher vor einem Erfassen der Umgebung quasi eine vorbeugende Anonymisierungsinformation durch eine konkrete Person abgelegt, die dann dem Fahrzeug zur Verfügung gestellt wird, wenn das Fahrzeug auf Erfassungsfahrt geht. Auch dadurch ist ein relativ aufwendiges Procedere erforderlich, da das Fahrzeug gegebenenfalls eine Vielzahl derartiger konkreter und abgespeicherter Privatbereiche bei der Erfassungsfahrt berücksichtigen muss.

Da die Datenschutzbestimmungen zu berücksichtigen sind, ist es gerade auch dann, wenn mit Erfassungseinheiten eines Fahrzeugs die Umgebung erfasst wird, von großer Bedeutung. Gerade dann, wenn erfasste Informationen über längere Zeit gespeichert werden sollen oder müssen und/oder die erfassten Daten für anderweitige Zwecke verwendet werden sollen, tritt dies im besonderen Maße in den Vordergrund.

Es ist Aufgabe der vorliegenden Erfindung, ein Verfahren zur elektronischen Verarbeitung von Umgebungsinformationen eines Kraftfahrzeugs zu schaffen, bei welchem die Verarbeitung relativ einfach erfolgen kann, dennoch den Anforderungen an den Datenschutz Genüge getan werden kann.

Diese Aufgabe wird durch ein Verfahren als auch ein elektronisches Informationsverarbeitungssystem gemäß den Merkmalen der unabhängigen Ansprüche gelöst.

Ein Aspekt der Erfindung betrifft ein Verfahren zum elektronischen Verarbeiten von Umgebungsinformationen eines Kraftfahrzeugs. Die Umgebungsinformationen werden von zumindest einer Erfassungseinheit des Kraftfahrzeugs erfasst. Personenbezogene Informationen, die in den Umgebungsinformationen enthalten sind, werden abhängig davon, ob die Person, welche die personenbezogenen Informationen betreffen, einen elektronischen Antrag gestellt hat, anonymisiert und/oder gelöscht. Das Kraftfahrzeug wird mit einer wahrnehmbaren Kennung versehen, mit welcher das Kraftfahrzeug als die Umgebung mit der Erfassungseinheit erfasstes Kraftfahrzeug gekennzeichnet wird. Die Person kann mit einer Kommunikationseinheit mit dieser Kennung eine elektronische Auswerteeinheit kontaktieren dahingehend, ob seine Person betreffende personenbezogenen Informationen in den Umgebungsinformationen enthalten sind. Zusätzlich oder anstatt dazu kann vorgesehen sein, dass die Person spezifizierende Personen-Lokalisierungsinformationen von der Person durch eine Kommunikationseinheit an eine elektronische Auswerteeinheit übertragen werden. Diese Personen-Lokalisierungsinformationen werden mit Kraftfahrzeug-Lokalisierungsinformationen, die bei einer Fahrt des Kraftfahrzeugs zur Erfassung von Umgebungsinformationen erfasst wurden, verglichen. Bei einer Übereinstimmung der Personen-Lokalisierungsinformationen mit den Kraftfahrzeug-Lokalisierungsinformationen wird die Person automatisch durch eine elektronische Nachricht der Auswerteeinheit zumindest informiert. Insbesondere dahingehend, dass personenbezogene Informationen dieser Person erfasst sein können.

Durch das Verfahren ist es nunmehr ermöglicht, dass nicht bereits vor der Fahrt Informationen über eine spezifische Person vorhanden sein müssen, die in Umgebungsinformationen anonymisiert und/oder gelöscht werden sollen, sondern dass Umgebungsinformationen zunächst ungehindert durch die Erfassungseinheit aufgenommen werden können, auch wenn dann personenbezogene Informationen mit erfasst werden. Durch das vorgeschlagene Verfahren wird daher der Aufwand bei der Erfassung der Umgebungsinformationen reduziert. Da dann gegebenenfalls Umgebungsinformationen mit personenbezogenen Informationen erfasst wurden, kann durch die geschilderten, individuell möglichen Abläufe nachträglich einer Person die Möglichkeit gegeben werden, sich insbesondere zunächst darüber informieren zu können, ob von dieser Person konkret personenbezogene Informationen in den Umgebungsinformationen enthalten sind. Es wird also in dem Zusammenhang in einem ersten Verfahrensschritt dann erst eine Information über die Auswerteeinheit bereitgestellt, die eine Person anfordern kann und in der sie insbesondere Möglichkeiten erfährt, ob überhaupt personenbezogene Informationen aufgenommen wurden und wenn ja, welche Möglichkeiten es dann gibt, um entsprechend handeln zu können. Es kann also durch diesen Verfahrensablauf der Person im Nachgang eines Erfassens von Umgebungsinformationen, auch mit gegebenenfalls personenbezogenen Informationen, nach dem Erhalt der primären Auskunft über die Auswerteeinheit überlassen werden, wie dann, wenn personenbezogene Informationen aufgenommen wurden, mit diesen verfahren wird. Insbesondere kann die Person dann nach Erhalt der Information von der Auswerteeinheit entscheiden, ob eine Anonymisierung und/oder Löschung erwünscht ist. Durch das vorgeschlagene Verfahren wird es durch ganz spezifische Vorgehensweisen ermöglicht, der Person im Nachgang zur Erfassung von Umgebungsinformationen somit quasi nachträglich die Möglichkeit zu bieten, sich über die erfassten Umgebungsinformationen informieren zu können. Durch die geschilderte vorteilhafte Ausführung kann eine Person, die sich in der Umgebung befindet, sehr einfach dann dahingehend informieren, da sie das Kraftfahrzeug mit der für die Person wahrnehmbaren Kennung selbst wahrnimmt und aufgrund dieser spezifischen Kennung erkennt, dass sich hier ein ganz spezifisches Kraftfahrzeug bewegt beziehungsweise in der Nähe der Person ist und dieses durch die Kennung dahingehend gekennzeichnet wird, dass Umgebungsinformationen ganz gezielt aufgenommen werden. Erkennt also eine Person ein derartiges Kraftfahrzeug mit einer wahrnehmbaren Kennung, kann die Person darauf schließen, dass Umgebungsinformationen erfasst werden und gegebenenfalls dann auch diese Person selbst betreffende personenbezogene Informationen aufgenommen werden oder wurden.

Gemäß dieser spezifischen Vorgehensweise kann eine Person daher auch einfach erkennen, dass gegebenenfalls personenbezogene Informationen aufgenommen wurden und kann dann durch die geschilderte spezifische Vorgehensweise mit dieser Kennung eine primäre Kontaktaufnahme mit der elektronischen Auswerteeinheit durchführen. Durch diesen ganz spezifischen geschilderten Weg, nämlich die Wirkkette über die Wahrnehmung der Kennung, das Aufgreifen der Kennung, um einen Kontakt zu der elektronischen Auswerteeinheit herzustellen und dann wiederum über diese elektronische Auswerteeinheit Primärinformationen zu erhalten, wie gegebenenfalls weiter vorgegangen werden kann, insbesondere im Hinblick auf die Möglichkeit zu erfahren, ob personenbezogene Informationen vorhanden sind und wenn ja, ob anonymisiert und/oder gelöscht werden soll, wird ein sehr effizientes mehrstufiges Verfahren geschaffen. Denn damit ist gegebenenfalls hoher Aufwand, die Umgebungsinformationen zu durchsuchen und dann gezielt die personenbezogenen Informationen zu anonymisieren und/oder zu löschen, an das Ende der Verarbeitungskette von Umgebungsinformationen geschoben. Insbesondere dann, wenn eine Person sich daran nicht stört, dass personenbezogene Informationen in den Umgebungsinformationen aufgezeichnet wurden, kann dann dieser finale Schritt der Anonymisierung und/oder Löschung unterbleiben, was insbesondere durch die betreffende Person selbst entschieden werden kann. Insbesondere auch dadurch kann gegebenenfalls Aufwand bei der Verarbeitung von Umgebungsinformationen und insbesondere bei der Berücksichtigung des Datenschutzes vermieden werden. Wie auch durch die weitere Möglichkeit angegeben, kann zusätzlich oder anstatt dazu, dass über die spezifische Kennung die Person selbst wahrnimmt, dass sie im Erfassungsbereich einer Erfassungseinheit des spezifischen Kraftfahrzeugs sein kann, andererseits über die genannten Lokalisierungsinformationen auch festgestellt werden, ob eine Person zu einem spezifischen Zeitpunkt an einem spezifischen Ort war und ob dann auch zu diesem Zeitpunkt an diesem Ort das Kraftfahrzeug war. Auch daraus kann dann darauf geschlossen werden, dass gegebenenfalls personenbezogene Informationen in den erfassten Umgebungsinformationen enthalten sind. Bei dieser zweiten Möglichkeit wird vorteilhafterweise automatisch dieser Vergleichsprozess der Lokalisierungsinformationen durchgeführt und dann automatisch durch eine elektronische Nachricht die Person informiert. Insbesondere erfolgt dies nur dann, wenn bei diesem Vergleich auch personenbezogene Informationen in den Umgebungsinformationen tatsächlich festgestellt wurden. Auch hier kann in der Nachricht der Auswerteeinheit, die an die Person versandt wird, zunächst eine allgemeine Information enthalten sein, die darüber informiert, dass bestimmte Handlungsmöglichkeiten für die Person gegeben sind. Erst dann, wenn die Person sich infolge dieser Nachricht meldet, insbesondere durch eine elektronische Kontaktaufnahme mit der elektronischen Auswerteeinheit, können dann weitere Handlungsmöglichkeiten angeboten und durchgeführt werden, insbesondere wenn die Person diese Handlungsmöglichkeiten dann auch wünscht beziehungsweise freigibt. Insbesondere kann dies dann auch ein Anonymisieren oder Löschen sein.

Durch das vorgeschlagene Verfahren werden sehr spezifische Möglichkeiten dargeboten, um eine Person grundsätzlich darauf aufmerksam zu machen oder die Möglichkeit zu geben, sich zu informieren, ob personenbezogene Informationen in erfassten Umgebungsinformationen enthalten sind oder enthalten sein könnten. Mit dem vorgeschlagenen mehrstufigen Verfahren wird erst am Ende der Ablaufkette tatsächlich ein Anonymisieren und/oder Löschen gestellt, wenn dies explizit von einer Person im Nachgang zu einem Erfassungsvorgang dann so gewünscht und beantragt wird. Damit kann unter anderem auch erheblicher Verarbeitungsaufwand der Umgebungsinformationen gespart werden.

Vorzugsweise ist vorgesehen, dass die wahrnehmbare Kennung des Kraftfahrzeugs als optische Kennung erzeugt wird und an dem Fahrzeug wahrnehmbar angezeigt wird. Beispielsweise kann die Kennung an einer Außenseite des Kraftfahrzeugs erzeugt werden, sodass sie in der Umgebung, insbesondere von einer Person in der Umgebung, einfach und sicher wahrgenommen werden kann. Insbesondere ist es dann auch möglich, diese Kennung mit einem elektronischen Gerät, beispielsweise einer elektronischen Erfassungseinheit, erfassen zu können. Beispielsweise ist es in dem Zusammenhang dann möglich, dass eine Person mit einem Kommunikationsendgerät, welches auch eine Kamera aufweist, diese Kennung aufnehmen kann, insbesondere als Bild. Beispielsweise kann diese wahrnehmbare Kennung ein Internetlink oder ein Link zu einer Software-Applikation oder aber auch ein QR (Quick Response)-Code sein. Diese Beispiele sind einfach verständlich und leicht aufnehmbar, sodass hier auch dann eine einfache und schnelle Möglichkeit geschaffen wird, mit der elektronischen Auswerteeinheit in Kontakt treten zu können.

Vorzugsweise ist vorgesehen, dass nach der durch die Person initiierten Kontaktaufnahme mit der elektronischen Auswerteeinheit oder durch die von der elektronischen Auswerteeinheit automatisch an die Person übersandte Nachricht durch diese elektronische Auswerteeinheit zunächst Informationen über weitere Handlungsmöglichkeiten für die Person angeboten werden.

Vorzugsweise ist vorgesehen, dass als Handlungsmöglichkeit ein Überprüfungsantrag beziehungsweise ein Auskunftsantrag an die Person angeboten wird, mit welchem die Person überprüfen lassen kann, ob personenbezogene Informationen erfasst wurden. Zusätzlich oder anstatt dazu kann als Handlungsmöglichkeit ein Anonymisierungsantrag angeboten werden, mit welchem die Person erfasste personenbezogene Informationen anonymisieren lassen kann. Zusätzlich oder anstatt dazu kann auch ein Löschungsantrag als Handlungsmöglichkeit angeboten werden, mit welchem erfasste personenbezogene Informationen gelöscht werden. Es sind somit spezifische unterschiedliche Handlungsmöglichkeiten gegeben, die die bereits oben genannten Vorteile mit sich bringen.

Es ist vorgesehen, dass die Kennung bei der Fortbewegung des Kraftfahrzeugs definiert dynamisch verändert wird, sodass ein Zusammenhang zwischen einem Zeitpunkt, zu dem sich das Kraftfahrzeug an einem spezifischen Ort befindet, und dem Zeitpunkt, zu dem die Kennung durch dynamische Änderung eine zeitspezifische Kennungserscheinung aufweist, erzeugt wird. Abhängig von diesem Zusammenhang wird erkannt, dass sich eine Person zu diesem Zeitpunkt an dem Ort des Kraftfahrzeugs befunden hat, wenn die Person mit dieser spezifischen Kennungserscheinung der Kennung in Kommunikation mit der elektronischen Auswerteeinheit tritt. Insbesondere kann dadurch auch darauf geschlossen werden, dass personenbezogene Informationen dieser Person erfasst wurden. In dem Zusammenhang kann ein relativ eindeutiger Zusammenhang gegeben werden, denn nur dann, wenn sich die Person in der nahen Umgebung des Kraftfahrzeugs zu dem Zeitpunkt befindet, zu dem die spezifische Kennungserscheinung am Kraftfahrzeug aufgetreten beziehungsweise angezeigt wurde, ist diese zeitlich begrenzte Anzeige der Kennungserscheinung das entsprechende Indiz.

Wenn die Wahrnehmbarkeit durch die Person direkt, nämlich mit den eigenen Augen, gegeben ist, und somit die Möglichkeit gegeben ist, zu dem Zeitpunkt dann auch diese Kennung gegebenenfalls auch elektronisch zu erfassen, nämlich mit einer eigenen Erfassungseinheit, bestätigt dies, dass diese Person zu diesem Zeitpunkt an dem entsprechenden Ort gewesen sein muss. Ebenso kann die Wahrnehmung in diesem Fall auch dadurch erfolgen, dass mit der Erfassungseinheit aus der Perspektive der Person die Kennung als Bild aufzunehmen und als Identifikation zu nutzen. Es kann dann durch Bildauswertung die Kennung und/oder aber auch die Umgehung des Fahrzeugs, welches die Kennung aufweist, genutzt werden, um ein Ortsidentifikation zu diesem spezifischen Zeitpunkt vorzunehmen.

In einer vorteilhaften Ausführung ist vorgesehen, dass von der Person zumindest eine personenbezogene Identifikationsinformation an die elektronische Auswerteeinheit übermittelt und bereitgestellt wird, und ein Erkennungsverfahren zum Erkennen der Person mit dieser personenbezogenen Information trainiert wird. Das Übermitteln von personenbezogenen Identifikationsinformationen an die Auswerteeinheit erfolgt insbesondere nach dem Erfassen der Umgebungsinformationen, insbesondere auch nach Aufmerksamwerden der Person auf das erfassende Kraftfahrzeug, insbesondere dessen Kennung, und/oder durch die von der Auswerteeinheit erhaltene elektronische Nachricht. Die erfassten Umgebungsinformationen werden mit den trainierten beziehungsweise parametrisierten Erkennungsverfahren dahingehend untersucht, ob die Person erfasst wurde. Das Suchergebnis wird an die Person durch ein Übersenden einer Nachricht mitgeteilt. Insbesondere erfolgt das Übersenden einer Nachricht elektronisch, das heißt es wird von der elektronischen Auswerteeinheit eine elektronische Nachricht an ein Kommunikationsgerät der Person übertragen.

Insbesondere ist es nicht nur in dem Zusammenhang vorteilhaft, wenn die Person durch dieses Kommunikationsgerät identifiziert ist. Beispielsweise kann dies durch eine eindeutige Kennung des Kommunikationsendgeräts erfolgen, die dann der Person zugeordnet wird. Die Person kann sich mittels dieses Kommunikationsgeräts, welches insbesondere ein Kommunikationsendgerät sein kann, bei der elektronischen Auswerteeinheit registrieren beziehungsweise identifizieren. Dadurch kann unter anderem auch die Übersendung einer elektronischen Nachricht von der elektronischen Auswerteeinheit an dieses Kommunikationsgerät schnell und einfach erfolgen.

Die Umgebungsinformationen werden vorzugsweise bei einer Trainingsfahrt des Kraftfahrzeugs erfasst, bei welcher Trainingsinformationen von der Erfassungseinheit aufgezeichnet werden. Diese Trainingsinformationen werden nach der Trainingsfahrt bezüglich ihrer Genauigkeit ausgewertet. Dies bedeutet, dass eine Trainingsfahrt insbesondere dahingehend zu verstehen ist, dass mit dem Kraftfahrzeug die Funktionsweise der Erfassungseinheit beobachtet und ausgewertet wird. Die bei dieser Trainingsfahrt von der Erfassungseinheit erfassten Informationen, insbesondere auch die Umgebungsinformationen, werden vorzugsweise nach der Trainingsfahrt ausgewertet, um eine Analyse dahingehend durchführen zu können, wie genau und funktionssicher die Erfassungseinheit arbeitet. Da gerade bei derartigen Trainingsfahrten eine umfängliche Nutzung der enthaltenen Daten, nämlich der Umgebungsinformationen, erfolgt, insbesondere auch gegebenenfalls über einen längeren Zeitraum ein Speichern dieser Informationen erfolgt und ein mehrfaches umfängliches Nutzen dieser Umgebungsinformationen erforderlich ist und benötigt wird, ist gerade bei derartigen Szenarien das oben geschilderte Verfahren besonders vorteilhaft. Gerade, da es vorzugsweise vorgesehen ist, derartige Informationen einer Trainingsfahrt auch länger zu speichern, um auch zu späteren Zeitpunkten weitere Analysen mit diesen Informationen durchführen zu können, ist hier auch der Datenschutz besonders zu beachten.

Vorzugsweise werden die Umgebungsinformationen mit zumindest einer Kamera als Erfassungseinheit erfasst. Gerade dann, wenn mit der Kamera Bilder oder Videos aufgezeichnet werden, sind personenbezogene Informationen besonders kritisch. Denn diese Informationen können in den Bildern einfach und schnell erkannt und wahrgenommen werden, sodass gerade hier der Datenschutz von besonderer Bedeutung ist.

Personenbezogene Informationen können konkrete Körperinformationen, insbesondere Körperteile, sein. Beispielsweise kann das das Gesicht sein oder die gesamte Person sein. Zusätzlich oder anstatt dazu können personenbezogene Daten auch der Name oder der Wohnort oder dergleichen sein. Personenbezogene Daten können neben diesen, als direkte personenbezogene Informationen, bezeichnete Daten auch indirekte personenbezogene Informationen sein. Dies kann beispielsweise ein Nummernschild eines Fahrzeugs sein, über welches indirekt auf den Halter etc. geschlossen werden kann.

Insbesondere werden die erfassten Umgebungsinformationen in einer Speichereinheit gespeichert. Dies erfolgt insbesondere vor einem gegebenenfalls beantragten Anonymisieren und/oder Löschen von personenbezogenen Informationen.

Indem durch das oben geschilderte Verfahren sowohl von Seiten des Kraftfahrzeugs und somit des die Erfassung durchführenden Systems eine Möglichkeit geschaffen wird, eine Person automatisch über ein mögliches Erfasstwordensein zu informieren, andererseits passiv eine für die Person erkennbare Möglichkeit geschaffen wird, unabhängig von der Kontaktaufnahme durch eine elektronische Auswerteeinheit mit der Person durch die Person selbst von sich aus Kontakt mit der elektronischen Auswerteeinheit aufzunehmen, wird ein umfassendes Verfahren bereitgestellt, um insbesondere auch wahlweise von beiden betroffenen Seiten, nämlich des Erfassenden einerseits und einer gegebenenfalls von der Erfassung betroffenen Person andererseits in Kontakt miteinander zu treten, um gegebenenfalls abzustimmen, was mit gegebenenfalls vorhandenen personenbezogenen Informationen getan werden soll. Dadurch ist quasi eine bidirektionale Möglichkeit der Kontaktaufnahme geschaffen, um den Anforderungen des Datenschutzes bei derartig komplexen Situationen, wie sie bei einer Umgebungserfassung eines Kraftfahrzeugs auftritt, bestmöglich Rechnung zu tragen.

Dadurch wird nicht nur eine vorgegebene einzige pauschale Handlungsweise bereitgestellt, sondern ein dynamisches und vielfältiges Entscheidungsszenario ermöglicht, welches eben der Person nach einem erfolgten Erfassungsszenario final die Möglichkeit selbst überlässt, ob Interesse besteht, gegebenenfalls vorhandene personenbezogene Informationen anonymisieren und/oder löschen zu lassen. Bei der bereits oben geschilderten Möglichkeit, welche personenbezogene Informationen an die Auswerteeinheit von der Person selbst zur Verfügung gestellt werden, kann auch die Genauigkeit der Analyse verbessert werden. Um generell eine erhöhte Sicherheit über die Aussage von personenbezogenen Informationen bereitstellen zu können, kann die Person selbst personenbezogene Identifikationsinformationen an die elektronische Auswerteeinheit übermitteln. Dies kann grundsätzlich auch erst dann erfolgen, wenn die Person von sich aus über die wahrnehmbare Kennung Kontakt mit der elektronischen Auswerteeinheit aufgenommen hat oder wenn sie von der elektronischen Auswerteeinheit als primäre Kontaktaufnahme eine entsprechende elektronische Nachricht erhalten hat. So kann es dann in einer vorteilhaften Ausführung auch vorgesehen sein, dass durch die Übermittlung der personenbezogenen Identifikationsinformationen an diese Auswerteeinheit ein noch besseres Analyseverfahren dahingehend erfolgen kann, ob tatsächlich über die betreffende Person personenbezogene Informationen in den Umgebungsinformationen enthalten sind. Dadurch kann eine genauere und vollständige Auskunft an die Person erteilt werden und ein Entscheidungsprozess, ob ein Anonymisieren und/oder Löschen notwendig ist beziehungsweise durchgeführt werden soll, präzisiert werden. Beispielsweise kann in dem Zusammenhang dann die anfragende Person eine gewisse Anzahl von Daten über sich selbst bereitstellen, womit eine Erkennung mit möglichst hoher Wahrscheinlichkeit gewährleistet werden kann. Beispielsweise können hierzu spezifische Personenmerkmale wie Gesichtsmerkmale oder betreffend den gesamten Körper der Person übertragen werden. Es können auch von einem Körpermerkmal, beispielsweise dem Gesicht, verschiedene Informationen, beispielsweise verschiedene Perspektiven des Gesichts, als personenbezogene Identifikationsinformationen an die elektronische Auswerteeinheit übermittelt werden. Auch können anderweitige Identifikationsinformationen, wie beispielsweise eine getragene Kleidung oder dergleichen, übermittelt werden. Auch spezifische Farbkombinationen dieser Kleidung können als personenbezogene Identifikationsinformationen von der Person an die elektronische Auswerteeinheit übermittelt werden.

Mittels dieser bereitgestellten Daten der Person wird, wie bereits oben dargelegt, ein Erkennungsverfahren trainiert beziehungsweise parametrisiert und die erfassten Umgebungsinformationen dahingehend untersucht. Insbesondere ist es dann vorgesehen, dass als finaler Schritt auch die dann von der Person übergebenen Daten im Nachgang wieder gelöscht werden. Insbesondere kann hier dann auch vereinbart werden, dass für eine Bereitstellung der Auskunft ein gewisses Zeitintervall, welches auch mehrere Wochen und gegebenenfalls bis zu einem Monat sein kann, als Bearbeitungszeit in Anspruch genommen werden darf. Dies kann auch beispielsweise in Form eines skalierbaren und verteilten Systems, welches die eingehenden Anfragen mit entsprechender Priorisierung abarbeitet, ermöglicht werden.

Ein weiterer Aspekt der Erfindung betrifft ein elektronisches Informationsverarbeitungssystem, mit einem Kraftfahrzeug und einer Auswerteeinheit, wobei das Informationsverarbeitungssystem zum Durchführen eines Verfahrens gemäß dem oben genannten Aspekt oder einer vorteilhaften Ausgestaltung davon ausgebildet ist. Insbesondere wird dieses Verfahren durch das elektronische Informationsverarbeitungssystem durchgeführt.

Das Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Ausführungsbeispiels eines elektronischen Informationsverarbeitungssystems; und
- Fig. 2: eine schematische Darstellung einer Umgebung, in welcher sich das Kraftfahrzeug entlang einer Trajektorie bewegt und Umgebungsinformationen erfasst.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

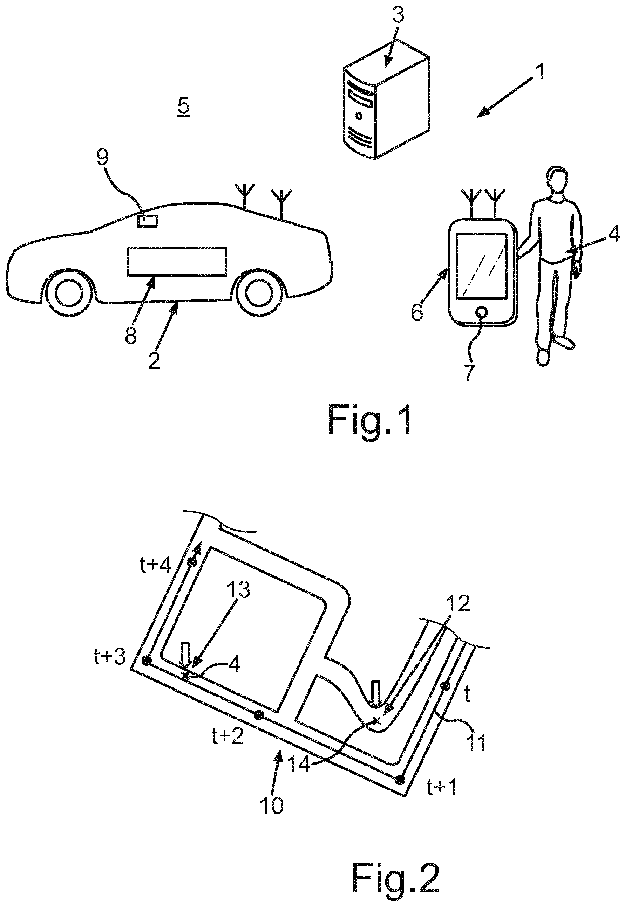

In Fig. 1 ist in einer schematischen Darstellung ein elektronisches Informationsverarbeitungssystem 1 gezeigt. Dieses Informationsverarbeitungssystem 1 weist zumindest ein Kraftfahrzeug 2 auf. Das Kraftfahrzeug 2 ist hier ein Personenkraftwagen. Darüber hinaus weist das Informationsverarbeitungssystem 1 eine elektronische Auswerteeinheit 3 auf. Die elektronische Auswerteeinheit 3 kann beispielsweise ein Server sein.

Insbesondere ist vorgesehen, dass eine Person 4 in einer Umgebung 5 sich befindet. Die Person 4 kann ein tragbares elektronisches Kommunikationsgerät 6 mit sich führen. Dieses Kommunikationsgerät 6 kann ein Kommunikationsendgerät, wie beispielsweise ein Mobilfunkgerät, sein. Insbesondere weist dieses Kommunikationsgerät 6 auch eine optische Erfassungseinheit 7, insbesondere eine Kamera, auf.

Es ist vorgesehen, dass das Kraftfahrzeug 2 eine definierte Kennung 8 aufweist. Die Kennung 8 ist insbesondere eine optische Kennung. Sie kann jedoch auch beispielsweise eine akustische Kennung sein. Die optische Kennung 8 ist vorzugsweise an einer Außenseite des Kraftfahrzeugs 2 angeordnet beziehungsweise so angeordnet, dass sie von außerhalb des Kraftfahrzeugs 2 optisch wahrgenommen werden kann, insbesondere durch die Person 4 optisch wahrgenommen werden kann, wenn sich das Kraftfahrzeug 2 in der Umgebung der Person 4 befindet. Diese Kennung 8 kann erfasst werden, beispielsweise durch die Erfassungseinheit 7 erfasst werden. Die optische Kennung 8 kann eine nicht beanspruchte statische Kennung sein, die ortsfest an dem Kraftfahrzeug 2 angeordnet ist und unveränderlich ist. Beispielsweise kann diese aufgeklebt oder aufgedruckt sein. Die optische Kennung 8 kann jedoch auch eine elektronische Kennung sein. Erfindungsgemäß ist sie dynamisch veränderbar, sodass sie zu unterschiedlichen Zeitpunkten definierte unterschiedliche zeitspezifische Kennungserscheinungen aufweist.

In vorteilhafter Weise ist vorgesehen, dass das Kraftfahrzeug 2 zum Durchführen von Trainingsfahrten ausgebildet ist. Das Kraftfahrzeug 2 weist zumindest eine Erfassungseinheit 9 auf. Diese Erfassungseinheit 9 ist so angeordnet, dass sie die Umgebung 5 des Kraftfahrzeugs 2 erfassen kann. Insbesondere ist die Erfassungseinheit 9 eine optische Erfassungseinheit, wie beispielsweise eine Kamera. Es kann auch eine Infrarotkamera vorgesehen sein. Ebenso kann jedoch auch ein Lidar-System vorgesehen sein. Auch andere Sensoren können vorgesehen sein. Mit dieser Erfassungseinheit 9 kann somit das Erfassen von Umgebungsinformationen erfolgen. Gerade bei einer Trainingsfahrt ist es vorgesehen, dass zu einer Beurteilung über die Funktionsfähigkeit der Erfassungseinheit 9 Umgebungsinformationen aufgezeichnet werden und abgespeichert werden, um sie im Nachgang analysieren zu können. Abhängig von dieser Analyse kann dann die Funktionalität der Erfassungseinheit 9 beurteilt werden. Insbesondere ist es in dem Zusammenhang dann auch vorgesehen, dass die bei dieser Trainingsfahrt aufgezeichneten Umgebungsinformationen für einen längeren Zeitraum gespeichert werden, um sie gegebenenfalls auch bei mehreren Analysen verwenden zu können.

Gerade bei derartigen Szenarien, jedoch nicht nur bei derartigen, kann es dann der Fall sein, dass auch personenbezogene Informationen, insbesondere der Person 4, mit erfasst werden. Um insbesondere den Anforderungen des Datenschutzes Genüge zu tun, wird eine ganz spezifische elektronische Verarbeitung von diesen Umgebungsinformationen durchgeführt.

In Fig. 2 ist in einer sehr vereinfachten schematischen Darstellung eine Draufsicht auf ein Verkehrswegenetz 10 gezeigt. In diesem Verkehrswegenetz 10 bewegt sich das Fahrzeug 2 entlang einer Fahrtrajektorie 11. Während dieser Fahrt werden mit der zumindest einen Erfassungseinheit 9 Umgebungsinformationen erfasst. An den in Fig. 2 gezeigten beispielhaften verschiedenen Positionen 12 und 13 sind beispielhaft jeweils eine Person 14 einerseits und die Person 4 andererseits befindlich. Wie in der Darstellung in Fig. 2 zu erkennen ist, befindet sich die Person 14 weiter beabstandet zum Kraftfahrzeug 2 und nicht im Erfassungsbereich der Erfassungseinheit 9, wenn sich das Kraftfahrzeug 2 zu dem Zeitpunkt t und zum Zeitpunkt t+1 entlang der Fahrtrajektorie bewegt. Die Person 14 wird somit nicht von der Erfassungseinheit 9 erfasst und in den Umgebungsinformationen, die zum Zeitpunkt t und zum Zeitpunkt t+1 sowie zu den dazwischenliegenden Zeitpunkten aufgenommen werden, sind keine personenbezogenen Informationen der Person 14 enthalten. Bewegt sich das Kraftfahrzeug 2 nun weiter und gelangt zum Zeitpunkt t+2 in die Nähe der Person 4, so ist es im Beispiel vorgesehen, dass durch die Erfassungseinheit 9 Umgebungsinformationen und personenbezogene Informationen der Person 4 erfasst werden. Das Kraftfahrzeug 2 fährt diesbezüglich bei der Fahrt, insbesondere der Trainingsfahrt, weiter und fährt an der Person 4 vorbei. Es setzt seine Fahrt insbesondere fort und gelangt zu den beispielhaften Zeitpunkten t+3 und t+4 in spezifische Bereiche des Verkehrswegenetzes 10.

In vorteilhafter Weise ist nun ermöglicht, dass dann, wenn die Person 4 bei der Vorbeifahrt des Kraftfahrzeugs 2 das Kraftfahrzeug 2 wahrnimmt insbesondere auch die außen erkennbare und wahrnehmbare Kennung 8 wahrnimmt, sodass die Person 4 erkennt, dass dieses Kraftfahrzeug 2 Umgebungsinformationen erfasst.

Die Person 4 kann nun initiativ auf Basis dieses Wissens von sich aus Kontakt mit der elektronischen Auswerteeinheit 3 aufnehmen. Beispielsweise kann in dem Zusammenhang diese wahrnehmbare Kennung 8, wenn sie beispielsweise von der Person 4 selbst bemerkt wurde, in eine elektronische Einheit, insbesondere das Kommunikationsgerät 6, eingegeben werden und so Kontakt mit der elektronischen Auswerteeinheit 3 aufgenommen werden. Die Kennung 8 kann beispielsweise ein Internetlink oder ein Software-Applikations-Link oder ein QR-Code sein. Die Kennung 8 kann auch ein alphanumerischer Wert beziehungsweise eine alphanumerische ID-Kennung sein. Durch die Eingabe dieser Kennung 8 in das Kommunikationsgerät 6 wird dann eine Kommunikation mit der elektronischen Auswerteeinheit 3 dahingehend aufgenommen, dass als dann erhaltene primäre Information weitergehende Handlungsmöglichkeiten für die Person angezeigt und angeboten werden können. Dies kann beispielsweise eine Information darüber sein, wie die Person 4 vorgehen kann, um zu erfahren, ob bei der Erfassung der Umgebungsinformationen auch die Person 4 betreffende personenbezogene Informationen erfasst wurden. Zusätzlich oder anstatt dazu kann als Handlungsmöglichkeit ein Überprüfungsantrag beziehungsweise Auskunftsantrag elektronisch angeboten werden, mit welchem die Person 4 überprüfen lassen kann, ob personenbezogene Informationen bei der Vorbeifahrt des Kraftfahrzeugs 2 erfasst wurden. Zusätzlich oder anstatt dazu kann dann auch ein Anonymisierungsantrag angeboten werden. Mit diesem kann die Person 4 beantragen, dass personenbezogene Informationen anonymisiert werden. Zusätzlich oder anstatt dazu kann auch ein Löschungsantrag angeboten werden, mit welchem die Person 4 erfasste personenbezogene Informationen löschen lassen kann. Insbesondere ist es in dem Zusammenhang dann auch möglich, dass die optische Kennung 8 durch die Erfassungseinheit 7 des Kommunikationsgeräts 6 optisch erfasst wird und auf Basis dieser Erfassung dann eine Kommunikation mit der elektronischen Auswerteeinheit 3 durchgeführt werden kann.

Es kann vorgesehen sein, dass gemäß diesem ersten Schritt, bei welchem die Person 4 über das Kommunikationsgerät 6 in einen Primärkontakt mit der elektronischen Auswerteeinheit 3 tritt, dies noch personenidentifiziert erfolgen muss. Wird dann jedoch in weiterer Kommunikation mit der elektronischen Auswerteeinheit 3 ein Überprüfungsantrag und/oder ein Anonymisierungsantrag und/oder ein Löschungsantrag von der Person 4 gestellt, ist es erforderlich, dass sich die Person 4 auch diesbezüglich eindeutig identifiziert. Beispielsweise kann dies über spezifische Identifikationsinformationen, die personenbezogen sind, erfolgen. Dies kann anhand von persönlichen Daten wie Name, Anschrift, Nummer eines Personalausweises oder dergleichen erfolgen. Zusätzlich oder anstatt dazu kann dies mit anderweitigen bildhaften Identifikationsinformationen erfolgen. Beispielsweise können die identifizierenden Körpermerkmale beispielsweise ein oder mehrere Bilder des Gesichts der Person 4 sein. Diese können dann von der Person 4 aufgenommen werden und beispielsweise über die Kommunikationsgerät 6 an die elektronische Auswerteeinheit 3 übersandt werden. Dadurch ist einerseits eine eindeutige Identifizierung für die genannten nachfolgenden Schritte, insbesondere der angebotenen Handlungsmöglichkeiten, ermöglicht. Andererseits kann in dem Zusammenhang dann auch noch eine schnellere und genauere Analyse der Umgebungsinformationen im Hinblick auf personenbezogene Informationen zur Person 4 ermöglicht werden. Eine schnellere und präzisere Suche nach personenbezogenen Informationen der Person 4 in den erfassten Umgebungsinformationen ist dadurch ermöglicht.

Es kann auch vorgesehen sein, dass die Person 4 spezifizierende Personen-Lokalisierungsinformationen von der Person 4 selbst mit dem Kommunikationsgerät 6 an die elektronische Auswerteeinheit 3 überträgt. Diese Personen-Lokalisierungsinformationen werden von der elektronischen Auswerteeinheit 3 mit Kraftfahrzeug-Lokalisierungsinformationen, die bei einer Fahrt des Kraftfahrzeugs 2 entlang der Trajektorie 11, insbesondere kontinuierlich, erfasst wurden, verglichen. Derartige Lokalisierungsinformationen können ein Standort und ein Zeitpunkt sein, zu dem das Kraftfahrzeug 2 an einem bestimmten Standort ist. Entsprechendes kann auch für die Person 4 erfolgen, die dann einen Standort angibt, zu dem sie zu einem spezifischen Zeitpunkt war. Diese Lokalisierungsinformationen betreffend das Kraftfahrzeug 2 werden bei der Fahrt automatisch und kontinuierlich erzeugt und abgespeichert. Bezüglich der Person 4 kann dies beispielsweise anhand eines mitgeführten Kommunikationsgeräts 6 erfolgen. Anhand dieses Kommunikationsgeräts 6 kann bestimmt werden, zu welchem Zeitpunkt dieses Kommunikationsgerät 6 an welchem Ort war. Kann dies automatisch festgestellt werden, kann das elektronische Informationsverarbeitungssystem 1 automatisch überprüfen, ob die Person 4 zu einem spezifischen Zeitpunkt, beispielsweise in Fig. 2 zum Zeitpunkt t+2, am gleichen Ort beziehungsweise im nahen Umgebungsbereich des Kraftfahrzeugs 2 war. Ist dies der Fall, kann in einem ersten Schritt automatisch eine elektronische Nachricht von der Auswerteeinheit 3 an das Kommunikationsgerät 6 übermittelt werden. Dies kann eine erste primäre Informationsnachricht sein. Insbesondere kann in dem Zusammenhang eine Nachricht übertragen werden, die es der Person 4 ermöglicht, auf eine mögliche Erfassung aufmerksam gemacht zu werden. Die Person 4 kann dann im Weiteren selbst entscheiden, ob sie in eine weitere Kommunikation mit der elektronischen Auswerteeinheit 3 tritt, um gegebenenfalls weitere Informationen zu erhalten, insbesondere Informationen darüber zu erhalten und zu beantragen, ob personenbezogene Informationen erfasst wurden.

Es kann jedoch auch vorgesehen sein, dass bei diesem genannten Vergleich der Lokalisierungsinformationen die elektronische Auswerteeinheit 3 bereits feststellt, dass personenbezogene Informationen erfasst wurden und in der Nachricht an die Person 4, die dieses Kommunikationsgerät 6 mitführt, bereits die Information enthalten ist, dass personenbezogene Informationen erfasst wurden. In dem Zusammenhang kann dann in einem weiteren Schritt die Person 4 in Kommunikation mit der elektronischen Auswerteeinheit 3 treten und in dem Zusammenhang dann einen Anonymisierungsantrag und/oder einen Löschungsantrag stellen.

Ebenso ist es möglich, dass die elektronische Nachricht von der elektronischen Auswerteeinheit 3 erst dann an das Kommunikationsgerät 6 übertragen wird, wenn vorher die Person 4 derartiges initiiert. Dies kann beispielsweise durch explizite Eingabe des Orts und des Zeitpunkts durch die Person 4 in das Kommunikationsgerät 6 erfolgen, wobei diese Informationen dann durch die Person 4 initiiert an die elektronische Auswerteeinheit 3 übermittelt werden. Bei dieser personeninitiierenden Übertragung dieser Lokalisierungsinformationen an die elektronische Auswerteeinheit 3 wird dann erst aufgrund dieses auslösenden Ereignisses in der elektronischen Auswerteeinheit 3 dieses Vergleichen der Lokalisierungsinformationen durchgeführt.

Es kann auch vorgesehen sein, dass sowohl auf Basis der wahrgenommenen Kennung 8 als auch auf Basis der Lokalisierungsinformationen eine Kommunikation zwischen der Person 4, insbesondere dem Kommunikationsgerät 6, und der elektronischen Auswerteeinheit 3 durchgeführt wird.

Insbesondere ist es bei den oben genannten Ausführungen auch möglich, dass die wahrnehmbare Kennung dynamisch veränderlich ist. Die Veränderung ist in dem Zusammenhang dahingehend definiert, dass zu spezifischen Zeitpunkten eine spezifische Kennungserscheinung der Kennung 8 angezeigt wird. Es ist somit zu jedem Zeitpunkt bekannt, welche Kennungserscheinung die Kennung 8 dann hatte. Damit ist eine eindeutige Zuordnung möglich, ob zu einem bestimmten Zeitpunkt die Person 4 an einem Ort war, an dem sich auch das Kraftfahrzeug 2 befunden hat. Denn nur dann kann die Person 4 die zu diesem Zeitpunkt spezifische Kennungserscheinung der Kennung 8 wahrgenommen haben und zur Kommunikation mit der elektronischen Auswerteeinheit 3 nutzen.

## Patentansprüche

1. Verfahren zum elektronischen Verarbeiten von Umgebungsinformationen eines Kraftfahrzeugs (2), bei welchem die Umgebungsinformationen von zumindest einer Erfassungseinheit (9) des Kraftfahrzeugs (2) erfasst werden, wobei personenbezogene Informationen, die in den Umgebungsinformationen enthalten sind, abhängig davon, ob die Person (4), welche die personenbezogenen Informationen betreffen, einen elektronische Antrag gestellt hat, anonymisiert und/oder gelöscht werden,
**dadurch gekennzeichnet, dass**
das Kraftfahrzeug (2) mit einer wahrnehmbaren Kennung (8) versehen wird, mit welcher das Kraftfahrzeug (2) als die Umgebung (5) mit der Erfassungseinheit (9) erfassendes Kraftfahrzeug (2) gekennzeichnet wird, wobei die Kennung (8) bei der Fortbewegung des Kraftfahrzeugs (2) dynamisch verändert wird, so das ein Zusammenhang zwischen einem Zeitpunkt, zu dem sich das Kraftfahrzeug (2) an einem spezifischen Ort befindet, und dem Zeitpunkt, zu dem die Kennung (8) durch ihre dynamische Änderung eine zeitspezifische Kennungserscheinung aufweist, erzeugt wird, wobei abhängig von dem Zusammenhang erkannt wird, das sich eine Person (4) zu diesem Zeitpunkt an dem Ort des Kraftfahrzeugs (2) befunden hat, wenn die Person (4) mit dieser spezifischen Kennungserscheinung der Kennung (8) in Kommunikation mit der Auswerteeinheit (3) tritt, insbesondere dadurch erkannt wird, dass personenbezogene Informationen dieser Person (4) erfasst wurden, wobei die Person (4) mit einer Kommunikationseinheit (6) mit dieser Kennung (8) eine elektronische Auswerteeinheit (3) dahingehend kontaktieren kann, welche Handlungsmöglichkeiten es gibt, um zu erfahren, ob seine Person (4) betreffend personenbezogene Informationen in den Umgebungsinformationen enthalten sind.

2. Verfahren nach Anspruch 1,
**dadurch gekennzeichnet, dass**
die Kennung (8) des Kraftfahrzeugs (2) als optische Kennung erzeugt wird und als Internetlink oder als Software-Applikations-Link oder als QR-Code am Kraftfahrzeug (2) selbst, insbesondere einer Außenseite des Kraftfahrzeugs (2), bereitgestellt wird.

3. Verfahren nach einem der vorhergehenden Ansprüche,
**dadurch gekennzeichnet, dass**
nach der durch die Person (4) initiierten Kontaktaufnahme mit der Auswerteeinheit (3) oder durch die von der Auswerteeinheit (3) automatisch an die Person (4) übersandte Nachricht durch die Auswerteeinheit (3) zunächst Informationen über weitere Handlungsmöglichkeiten für die Person (4) angeboten werden.

4. Verfahren nach Anspruch 3,
**dadurch gekennzeichnet, dass**
als Handlungsmöglichkeit ein Überprüfungsantrag angeboten wird, mit welchem die Person (4) überprüfen lassen kann, ob personenbezogene Informationen erfasst wurden, und/oder ein Anonymisierungsantrag angeboten wird, mit welchem die Person (4) erfasste personenbezogene Informationen anonymisieren lassen kann und/oder ein Löschungsantrag angeboten wird, mit welchem erfasste personenbezogene Informationen gelöscht werden.

5. Verfahren nach einem der vorhergehenden Ansprüche,
**dadurch gekennzeichnet, dass**
von der Person (4) zumindest eine personenbezogene Identifikationsinformation an die Auswerteeinheit (3) elektronisch übermittelt und bereitgestellt wird, und ein Erkennungsverfahren zum Erkennen der Person (4) mit dieser personenbezogenen Identifikationsinformation trainiert wird, wobei die erfassten Umgebungsinformationen mit dem trainierten Erkennungsverfahren dahingehend untersucht werden, ob die Person (4) erfasst wurde, insbesondere das Suchergebnis an die Person (4) durch ein Übersenden einer elektronischen Nachricht mitgeteilt wird.

6. Verfahren nach einem der vorhergehenden Ansprüche,
**dadurch gekennzeichnet, dass**
die Umgebungsinformationen bei einer Trainingsfahrt des Kraftfahrzeugs (2) erfasst werden, bei welcher Trainingsinformationen von der Erfassungseinheit (9) aufgezeichnet werden, die nach der Trainingsfahrt bezüglich ihrer Genauigkeit ausgewertet werden.

7. Verfahren nach einem der vorhergehenden Ansprüche,
**dadurch gekennzeichnet, dass**
die Umgebungsinformationen mit zumindest einer Kamera als Erfassungseinheit (9) erfasst werden.

8. Verfahren nach einem der vorhergehenden Ansprüche,
**dadurch gekennzeichnet, dass**
die Person (4) spezifizierende Personen-Lokalisierungsinformationen, die einen Standort betreffen, zu dem die Person (4) zu einem spezifischen Zeitpunkt war, von der Person (4) durch eine Kommunikationseinheit (6) an eine elektronische Auswerteeinheit (3) übertragen werden, wobei diese Personen-Lokalisierungsinformationen mit Kraftfahrzeug-Lokalisierungsinformationen, die bei einer Fahrt des Kraftfahrzeugs (2) zur Erfassung von Umgebungsinformationen erfasst wurden, verglichen werden, und bei einer Übereinstimmung der Personen-Lokalisierungsinformationen mit den Kraftfahrzeug-Lokalisierungsinformationen die Person (4) durch eine elektronische Nachricht der elektronischen Auswerteeinheit (3) zumindest darüber informiert wird, dass personenbezogene Informationen erfasst sein können.

9. Elektronisches Informationsverarbeitungssystem (1), mit einem Kraftfahrzeug (2) und einer Auswerteeinheit (3), wobei das Informationsverarbeitungssystem (1) zum Durchführen eines Verfahrens nach einem der vorhergehenden Ansprüche ausgebildet ist.

## Claims

1. Method for electronically processing surroundings information of a motor vehicle (2), in which method the surroundings information is detected by at least one detection unit (9) of the motor vehicle (2), wherein personal information included in the surroundings information is anonymised and/or deleted depending on whether the person (4) to whom the personal information relates has made an electronic request,
**characterised in that**
the motor vehicle (2) is provided with a perceivable identifier (8) with which the motor vehicle (2) is characterised as a motor vehicle (2) detecting the surroundings (5) using the detection unit (9), wherein the identifier (8) is dynamically changed during the movement of the motor vehicle (2), such that an association is established between a point in time at which the motor vehicle (2) is located at a specific location and the point in time at which the identifier (8) has a time-specific identifier appearance as a result of its dynamic change, wherein it is determined depending on the association that a person (4) was located at this point in time at the location of the motor vehicle (2) when the person (4) enters into communication with the evaluation unit (3) using this specific identifier appearance of the identifier (8), this being determined in particular due to the fact that personal information relating to this person (4) was detected, wherein the person (4) can make contact with an electronic evaluation unit (3) using a communication unit (6) with this identifier (8) so as to find out what possible actions there are in order to learn whether personal information relating to his/her person (4) is included in the surroundings information.

2. Method according to claim 1,
**characterised in that**
the identifier (8) of the motor vehicle (2) is generated as an optical identifier and is provided as an internet link or as a software application link or as a QR code on the motor vehicle (2) itself, in particular an outer side of the motor vehicle (2).

3. Method according to any of the preceding claims,
**characterised in that**
after the person (4) has initiated contact with the evaluation unit (3) or the message is automatically sent to the person (4) by the evaluation unit (3), information is first offered by the evaluation unit (3) about further possible actions available to the person (4).

4. Method according to claim 3,
**characterised in that**
as a possible action, a verification request is offered which enables the person (4) to verify whether personal information has been detected and/or an anonymisation request is offered which enables the person (4) to anonymise detected personal information and/or a deletion request is offered which enables detected personal information to be deleted.

5. Method according to any of the preceding claims,
**characterised in that**
at least one item of personal identification information is electronically transmitted and provided by the person (4) to the evaluation unit (3), and a recognition method for recognising the person (4) is trained using this item of personal identification information, wherein the detected surroundings information is examined using the trained recognition method so as to determine whether the person (4) has been detected, in particular the search result is communicated to the person (4) by sending an electronic message.

6. Method according to any of the preceding claims,
**characterised in that**
the surroundings information is detected during a training drive of the motor vehicle (2), in which the detection unit (9) records training information which is evaluated in terms of its accuracy after the training drive.

7. Method according to any of the preceding claims,
**characterised in that**
the surroundings information is detected using at least one camera as the detection unit (9).

8. Method according to any of the preceding claims,
**characterised in that**
personal location information specifying the person (4) and relating to a location at which the person (4) was located at a specific point in time is transmitted by the person (4) through a communication unit (6) to an electronic evaluation unit (3), wherein this personal location information is compared with motor vehicle location information which was recorded during a drive of the motor vehicle (2) for detecting surroundings information, and in the event of a match between the personal location information and the motor vehicle location information, the person (4) is at least informed by an electronic message from the electronic evaluation unit (3) that personal information may have been detected.

9. Electronic information processing system (1), having a motor vehicle (2) and an evaluation unit (3), wherein the information processing system (1) is designed to perform a method according to any of the preceding claims.

## Revendications

1. Procédé de traitement électronique d'informations d'environnement d'un véhicule automobile (2), dans lequel les informations d'environnement sont enregistrées par au moins une unité d'enregistrement (9) du véhicule automobile (2), dans lequel des informations personnelles contenues dans les informations d'environnement sont anonymisées et/ou effacées en fonction de la formulation ou non d'une demande électronique par la personne (4) concernée par les informations personnelles,
**caractérisé en ce que**
le véhicule automobile (2) est muni d'un identifiant (8) détectable grâce auquel le véhicule automobile (2) est identifié comme étant le véhicule automobile (2) enregistrant l'environnement (5) grâce à l'unité d'enregistrement (9), dans lequel l'identifiant (8) est modifié de manière dynamique lors du déplacement du véhicule automobile (2), de sorte qu'une relation est créée entre un moment où le véhicule automobile (2) se trouve à un endroit spécifique et le moment où l'identifiant (8) présente l'apparition d'un identifiant lié au temps du fait de sa modification dynamique, dans lequel le fait qu'une personne (4) s'est trouvée à l'emplacement du véhicule automobile (2) audit moment est enregistré en fonction de ladite relation lorsque la personne (4) présentant ladite apparition d'identifiant spécifique de l'identifiant (8) entre en communication avec l'unité d'évaluation (3), en particulier dans lequel des informations personnelles de ladite personne (4) ont été enregistrées, dans lequel la personne (4) peut, grâce à une unité de communication (6) et munie dudit identifiant (8), prendre contact avec une unité d'évaluation électronique (3), ce qui fournit des possibilités d'action pour savoir si des informations personnelles concernant sa personne (4) sont contenues dans les informations d'environnement.

2. Procédé selon la revendication 1,
**caractérisé en ce que**
l'identifiant (8) du véhicule automobile (2) est généré sous forme d'identifiant optique et est fourni sous forme de lien Internet ou sous forme de lien vers une application logicielle ou sous forme de code QR au véhicule automobile (2) proprement dit, en particulier à un côté extérieur du véhicule automobile (2).

3. Procédé selon l'une quelconque des revendications précédentes,
**caractérisé en ce que**
des informations sur des possibilités supplémentaires d'action à la disposition de la personne (4) sont d'abord proposées par l'unité d'évaluation (3) après la prise de contact, initiée par la personne (4), avec l'unité d'évaluation (3) ou grâce au message envoyé de manière automatique par l'unité d'évaluation (3) à la personne (4).

4. Procédé selon la revendication 3,
**caractérisé en ce que**
une demande de vérification permettant à la personne (4) de vérifier si des informations personnelles ont été enregistrées, et/ou une demande d'anonymisation permettant à la personne (4) d'anonymiser des informations personnelles enregistrées, et/ou une demande d'effacement permettant d'effacer des informations personnelles enregistrées est/sont proposée(s) en tant que possibilité(s) d'action.

5. Procédé selon l'une quelconque des revendications précédentes,
**caractérisé en ce que**
au moins une information d'identification personnelle est transmise et fournie de manière électronique à l'unité d'évaluation (3) par la personne (4), et un procédé de reconnaissance permettant de reconnaître la personne (4) est préparé grâce à ladite information d'identification personnelle, dans lequel les informations d'environnement enregistrées sont examinées grâce au procédé de reconnaissance préparé afin de déterminer si la personne (4) a été enregistrée, dans lequel le résultat de recherche est en particulier communiqué à la personne (4) grâce à l'envoi d'un message électronique.

6. Procédé selon l'une quelconque des revendications précédentes,
**caractérisé en ce que**
les informations d'environnement sont enregistrées lors d'un trajet de préparation du véhicule automobile (2), dans lequel des informations de préparation dont l'exactitude est évaluée après le trajet de préparation sont enregistrées par l'unité d'enregistrement (9).

7. Procédé selon l'une quelconque des revendications précédentes,
**caractérisé en ce que**
les informations d'environnement sont enregistrées grâce à au moins une caméra faisant office d'unité d'enregistrement (9).

8. Procédé selon l'une quelconque des revendications précédentes,
**caractérisé en ce que**
les informations de localisation de personnes spécifiques à la personne (4) et concernant un emplacement où se trouvait la personne (4) à un moment spécifique sont transmises par la personne (4) à une unité d'évaluation électronique (3) grâce à une unité de communication (6), dans lequel lesdites informations de localisation de personnes sont comparées à des informations de localisation de véhicules automobiles enregistrées lors d'un trajet du véhicule automobile (2) destiné à l'enregistrement d'informations d'environnement, et, en cas de concordance des informations de localisation de personnes avec les informations de localisation de véhicules automobiles, la personne (4) est au moins informée grâce à un message électronique de l'unité d'évaluation électronique (3) que des informations personnelles peuvent être enregistrées.

9. Système électronique de traitement d'informations (1) comprenant un véhicule automobile (2) et une unité d'évaluation (3), dans lequel le système de traitement d'informations (1) est conçu pour mettre en œuvre un procédé selon l'une quelconque des revendications précédentes.
